Europäisches Patentamt

European Patent Office

Office européen des brevets

(19)

(11) Numéro de publication: **0 055 494**
**B1**

(12) **FASCICULE DE BREVET EUROPEEN**

(45) Date de publication du fascicule du brevet: **08.08.84**

(51) Int. Cl.³: **B 29 C 17/07, B 29 F 3/04**

(21) Numéro de dépôt: **81200544.5**

(22) Date de dépôt: **21.05.81**

(54) **Machine pour la fabrication en continu d'un tube annelé contenant un fil intérieur.**

(30) Priorité: **29.12.80 FR 8027739**

(43) Date de publication de la demande:
**07.07.82 Bulletin 82/27**

(45) Mention de la délivrance du brevet:
**08.08.84 Bulletin 84/32**

(84) Etats contractants désignés:
**AT BE CH DE GB IT LI LU NL SE**

(56) Documents cités:
**DE - B - 1 248 913**
**FR - A - 1 515 694**
**FR - A - 2 189 832**
**FR - A - 2 337 620**
**FR - A - 2 349 195**
**FR - A - 2 397 934**
**GB - A - 1 526 777**
**GB - A - 1 560 750**
**US - A - 2 401 551**
**US - A - 2 760 228**
**US - A - 3 211 818**
**US - A - 3 346 921**
**US - A - 3 513 017**
**US - A - 3 520 023**

(73) Titulaire: **CANY, Léon**
**9, rue Richard Fosse**
**F-81100 Castres (FR)**

(72) Inventeur: **CANY, Léon**
**9, rue Richard Fosse**
**F-81100 Castres (FR)**

(74) Mandataire: **Barre, Philippe**
**Cabinet Barre-Gatti-Laforgue 95 rue des**
**Amidonniers**
**F-31069 Toulouse Cédex (FR)**

Courier Press, Leamington Spa, England.

### Description

L'invention concerne une machine pour la fabrication en continu d'un tube annelé en matière thermoplastique contenant un fil intérieur libre de petit diamètre par rapport à celui du tube annelé. Elle vise en particulier à fournir dans le secteur du bâtiment des tubes annelés appelés à servir de fourreaux de câbles électriques, le fil intérieur servant à introduire par traction ces câbles électriques dans les tubes annelés après mise en place de ces derniers.

La technique de fabrication en continu de tubes annelés est maintenant conneu depuis de nombreuses années; on peut se rapporter par exemple au brevet japonais n° 30.28297 déposé le 28.10.1955, qui décrit une machine de fabrication pourvue, d'une part, d'une tête d'extrusion formant à partir de la matière thermoplastique un tube lisse, d'autre part, d'un moule mobile formant deux chenillettes sans fin tournantes, pour conformer la paroi annelée du tube; un fluide sous pression arrivant dans le tube lisse au niveau de moule permet de gonfler le tube lisse et d'appliquer sa paroi plastique contre le moule afin de réaliser cette conformation. Une telle technique est parfaitement connue, et on ne donnera pas plus de détails sur les diverses caractéristiques classiques des machines de mise en oeuvre.

Toutefois, l'insertion d'un fil à l'intérieur du tube annelé au cours de la fabrication de ce dernier pose un problème mal résolu à l'heure actuelle; l'état actuel de l'art antérieur concernant cette insertion d'un fil dans un tube annelé peut être illustré par le brevet FR—A—2.397.934. Contrairement à ce qui se passe pour la fabrication des tubes lisses, la fabrication des tubes annelés requiert nécessairement la présence 'dun fluide sous pression qui est acheminé vers le centre de la tête d'extrusion pour déboucher au niveau du moule; l'homme de l'art a constamment buté sur les difficultés rencontrées pour acheminer dans des conditions satisfaisantes, à la fois, cet air comprimé et le fil appelé à se loger dans le tube annelé. Ainsi, le brevet sus-évoqué indique en commentant l'état de la technique: "les techniques habituelles de fabrication de tubes annelés sont difficilement adaptables à la fabrication d'un tube annelé à fil intérieur en raison de la pression d'air acheminée par le centre du dispositif d'extrusion, habituellement par une tige fixée au poinçon et comportant à son autre extrémité une olive formant bouchon d'air"; et ce brevet ajoute: "la pression reste très difficile à réguler et on consomme en plus un volume d'air très important. De toutes façons, une solution combinant une arrivée d'air et de fil dans un même canal ne conviendrait pas en raison d'une dépression créée à la sortie de la filière, ce qui est précisément à éviter pour une bonne conformation du tube".

Après avoir défini l'état d'esprit et les connaissances de l'homme du métier, ce brevet propose une solution consistant à prévoir dans la machine un canal d'amenée de fil indépendant du canal d'acheminement de l'air: le fil arrive par un conduit oblique sur un côte de la tête d'extrusion et pénètre au centre de la tête dans un tube axial prévu à cet effet, qui s'étend sur toute la longueur de la machine, cependant qui l'air arrive par un conduit situé de l'autre côté de la tête d'extrusion, parvient au centre de la tête d'extrusion dans des éléments qui le répartissent autour du tube contenant le fil et est acheminé autour de ce tube par des moyens adaptés jusqu'a déboucher au niveau du moule fermé, en amont de l'olive qui est prévue de façon traditionnelle pour réduire la dépression qui apparaitrait en cas d'échappement libre. Ainsi, selon ce brevet, le trajet du fil et le trajet de l'air sont parfaitement séparés et isolés et l'air peut jouer correctement son rôle traditionnel d'applicateur du tube lisse thermoplastique contre le moule mobile.

Toutes les études menées jusqu'à présent se sont orientées dans le sens ci-dessus résumé, consistant à prévoir des solutions aussi simples que possibles pour isoler le trajet du fil et le trajet de l'air comprimé.

Toutefois, ce type de technique présente plusieurs inconvénients. En premier lieu, la structure de la machine est rendue notablement plus complexe par l'adjonction d'une part, du tube guide-fil qui s'étend à l'intérieur de la tête d'extrusion et sur toute la longueur de la machine, d'autre part, des éléments de répartition de l'air comprimé situés à l'intérieur de ladite tête d'extrusion. En outre, un grave inconvénient de cette technique réside dans l'impossibilité de fabriquer des tubes annelés de petits diamètres: en pratique, la présence du tube guide-fil dans la filière ne permet pas de fabriquer des tubes annelés ayant des diamètres internes inférieures à environ 15 mm. De plus, dans la technique sus-évoquée, le fil n'est pas directement refroidi puisque le trajet de fil et le trajet de l'air sont séparés et, compte tenu de la température relativement élevée à laquelle se trouve le boudin de matière thermoplastique dans la tête d'extrusion (180° à 220° en fonction de la nature de la matière), cette technique et réservée à l'insertion de fils métalliques qui ne risquent pas d'être détériorés par la chaleur; une telle technique ne peut en aucun cas permettre d'insérer des fils en matière synthétique (par exemple en polyamide) qui se déformeraient ou même fondraient lors de leur passage dans la tête d'extrusion. Notons en outre que le fil présente un trajet coudé à l'intérieur de tête d'extrusion; après passage du coude, il doit se redresser pour pénétrer dans le tube guide-fil axial et, pour certains types de fils, ce changement de direction s'accompagne de difficultés pratiques délicates à résoudre (pouvant imposer dans certains cas une réduction considérable de la vitesse de fabrication). En outre, une usure prématurée est à craindre par friction au niveau de la pièce coudée de la machine.

La présente invention se propose d'indiquer une autre solution pour fabriquer des tubes annelés contenant un fil, qui soit exempte des défauts de la solution sus-évoquée.

Un objectif de l'invention est en particulier de fournir une machine simple, dont la structure ne soit pas notablement compliquée par rapport aux machines traditionnelles de fabrication de tube annelé sans fil interne.

Un autre objectif est de permettre la fabrication de tous les diamètres habituels de tubes, qui sont susceptibles d'être réalisés par ces machines traditionnelles et notamment tubes de diamètre inférieur à 15 mm.

Un autre objectif est de permettre l'insertion de types de fils considérablement plus diversifiés que dans la technique d'insertion évoquée précédemment, en particulier fils en matière synthétique tels que fils en polyamide ou matières analogues.

Un autre objectif est de fournir une solution applicable pour les divers types de têtes d'extrusion existances, têtes dites offset (ou encore double équerre), têtes d'équerre, têtes droites.

Un autre objectif est d'autoriser des fabrications à vitesse élevée, sans difficulté technique, et ce avec la plupart des types de fils à insérer.

Un autre objectif est de fournir une solution écartant les risques d'usures prématurées de certaines pièces de la machine.

A cet effet, la machine visée par l'invention est du type comprenant essentiellement:

· une tête d'extrusion formée d'un corps amont pour l'arrivée de la matière thermoplastique, d'une filière et d'une torpille intérieure se prolongeant par un poinçon pour la conformation tubulaire de la matière,
· une barre porteuse d'olive, adaptée pour se fixer dans le prolongement de poinçon et porter sur sa périphérie une olive,
· un moule fermé, adapté pour conformer la paroi annelée du tube et constitué de deux séries de matrices formeuses tournantes, formant deux chenillettes sans fin,
· des moyens d'amenée d'un fluide sous pression comportant un canal d'arrivée de fluide au niveau du corps et de la torpille, se prolongeant par un canal axial au niveau du poinçon et de la barre porteuse d'olive,
· des moyens d'alimentation en fil et des moyens d'amenée dudit fil au niveau de la tête d'extrusion.

Selon la présente invention, cette machine présente les caractéristiques suivantes:

· les moyens d'amenée de fil dans la tête d'extrusion débouchent dans la canal d'arrivée de fluidé, ledit canal ainsi que le canal axial de poinçon et de la barre étant adaptés pour remplir la double fonction de conduit de fluide et de guide de fil,

· lesdits moyens d'amenée de fil comprennent en amont de la zone de jonction avec le canal d'arrivée de fluide, des moyens d'obturation partielle aptes à autoriser le passage du fil et à introduire une perte de charge adaptée pour limiter la dépression dans le canal d'arrivée de fluide,
· la barre porteuse d'olive est percée, en amont de l'oive, de canaux de sortie de fluide et est dotée en aval de ces canaux de moyens d'obturation partielle de sons canal axial aptes à autoriser le passage du fil et à introduire une perte de charge adaptée pour limiter la dépression au niveau des canaux de sortie précités.

Notons que par "canal axial adapté pour remplir la double fonction de conduit de fluide et de guide de fil", on entend un canal dimensionné pour gúider correctement le fil sur son trajet tout en préservant un passage d'air satisfaisant autour du fil sans pertes de charge excessives.

Selon un premier mode de réalisation, les moyens d'obturation partielle associés aux moyens d'amenée de fil comprennent un canal calibré de passage du fil, situé entre les moyens d'alimentation en fil et le canal d'arrivée de fluide, ledit canal calibré présentant un diamètre légèrement supérieur au diamètre du fil de façon à préserver autour dudit fil un jeu approximativement compris entre

$$\frac{2}{100} \text{ mm et } \frac{20}{100} \text{ mm.}$$

Selon un autre mode de réalisation, les moyens d'obturation partielle associés aux moyens d'amenée de fil comprennent une membrane d'étanchéïté en matière souple, traversée par le fil et située entre les moyens d'alimentation en fil et le canal d'arrivée de fluide. Cette membrane d'étanchéïté qui peut être un élastomère, caoutchouc etc... est percée par l'opérateur au début des opérations au moyen du fil à insérer de façon que son trou épouse parfaitement le contour du fil.

De préférence, les deux modes de réalisation ci-dessus décrits sont combinés de façon à introduire une perte de charge très élevée pour le fluide (s'accompagnant d'une dépression négligeable dans le canal d'arrivée), tout en autorisant un passage parfaitement satisfaisant du fil.

Par ailleurs, les moyens d'obturation partielle qui sont associés, à l'autre bout de la machine, à la barre porteuse d'olive, peuvent comprendre un bouchon obturant partiellement le canal axial de ladite barre; ce bouchon est percé d'un canal axial adapté pour autoriser le passage du fil avec du jeu.

Lorsque la barre porteuse d'olive présente une longueur importante (ce qui est la tendance actuelle dans la fabrication des tubes annelés), les moyens d'obturation partielle associés à cette barre peuvent être simplement constitués par le canal axial de celle-ci; le diamètre de ce canal est alors prévu en fonction de la longueur de la barre de façon à introduire une perte de charge suffisante sur la longueur pour que la dépression en amont de l'olive soit faible ou négligeable. Par exemple, pour une longueur de barre supérieure à 1m, le canal axial de celle-ci peut présenter un diamètre inférieur à environ 5 fois le diamètre du fil; la dépression en amont de l'olive est alors acceptable.

Les essais ont montré que, pour une barre de 2m de long, un canal de diamètre de l'ordre de 3 à 4 fois celui du fil, introduit une dépression faible en amont de l'olive quie ne perturbe pas le fonctionnement de la machine et la bonne conformation du tube annelé.

Bien entendu, il est possible, même pour des barres longues, de prévoir, outre le canal dimensionné comme ci-dessus indiqué, un bouchon disposée en bout de la barre, tel que décrit plus haut. La dépression en amont de l'olive est alors parfaitement négligeable.

Ainsi, le processus inventif a consisté, d'abord, à repousser les préjugés de l'art antérieur qui faisaient paraître comme impossible toute association du fil et de fluide dans un même canal, puis à trouver les moyens permettant un fonctionnement satisfaisant en prévoyant cette association. Elle a conduit à une structure de machine extrêmement simple, ayant un fonctionnement parfait, ce qui paraîtra tout à fait inattendu à l'homme du métier.

En particulier, cette machine ne comporte plus les pièces intérieures qui étaient prévues dans la technique antérieure (tube supplémentaire guide-fil, éléments répartiteurs d'air...); les moyens d'obturation partielle sont des éléments extrêmement simples et n'apportent aucune complication notable à la machine. De plus, la présence d'un seul organe qui sert à la fois à guider le fil et à conduire l'air (au lieu de deux organes concéntriques dans la technique antérieure) permet de réaliser des tubes de petits diamètres (par exemple tube de diamètre interne de 8 mm).

Par ailleurs, sur tout son trajet, le fil est plongé dans le flux d'air et se trouve directement refroidi, ce qui permet d'utiliser sans risque des gammes de fils beaucoup plus étendues et, notamment, des fils synthétiques (en particulier comme on le verra plus loin, dans le cas de tête offset ou tête équerre où le trajet du fil peut être rectiligne); même au niveau des moyens d'obturation partielle, il se forme dans le faible jeu existant autour du fil une pellicule de fluide qui évite tout échauffement excessif du fil.

Les moyens d'alimentation en fil peuvent comprendre, comme dans la technique antérieure, des moyens d'entraînement synchronisés pour délivrer le fil vers la tête d'extrusion à une vitesse égale à la vitesse de défilement du tube annelé.

De préférence, la machine conforme à l'invention est équipée d'une tête d'extrusion du type tête d'équerre ou tête offset; selon une caractéristique de l'invention, la torpille de la tête est alors percée d'un canal rectiligne axial, situé dans le prolongement du canal axial du poinçon et adapté pour faire office de conduit de fluide et de guide de fil; ce canal débouche frontalement en amont de la torpille, où il est raccordé aux moyens d'amenée de fil, et communique, en aval de ceux-ci, avec un canal latéral d'amenée de fluide dont est percée la torpille (et le cas échéant le corps de la tête d'extrusion).

Ainsi, le trajet du fil est rectiligne d'un bout à l'autre de la machine, ce qui, quel que soit le fil utilisé, élimine les risques d'usure prématurée de pièces de la machine, autorise des vitesses de fonctionnement élevées et réduit encore les contraintes subies par le fil.

Ce type de mode de réalisation sera en particulier préféré pour l'insertion de fils synthétiques. Dans ce cas, la machine est avantageusement associée, en aval, à des moyens de traction du fil à une vitesse égale à la vitesse de défilement du tube annelé. Ces moyens de traction peuvent ou non être combinés à des moyens d'entraînement amont tels que déjà évoqués, (adaptés pour délivrer le fil vers la tête d'extrusion à la vitesse de défilement du tube annelé). On évite ainsi dans le cas d'un fil souple que celui-ci se plisse, les moyens de traction ci-dessus indiqués pouvant être très simplement constitués par l'enrouleur traditionnel sur lequel le tube annelé vient se disposer à la sortie de la machine: au début des opérations, l'extrémité aval du fil est fixée sur cet enrouleur qui réalise ainsi la traction désirée.

Bien entendu, la machine conforme à l'invention peut, le cas échéant, être équipée d'une tête d'extrusion du type tête droite ayant un canal d'arrivée de fluide coudé avec un tronçon amont oblique et un tronçon aval axial; dans ce cas, les moyens d'amenée du fil sont raccordés sur le tronçon amont oblique du canal d'arrivée de fluide. De préférence, ces moyens d'amenée du fil sont raccordés axialement en bout du tronçon oblique (afin de ne pas imposer un autre changement de direction au fil) et le fluide arrive par une conduit latéral dans ledit tronçon oblique.

L'invention ayant été exposée dans sa forme générale, la description qui suit en référence aux dessins annexés en présente, à titre d'exemple non limitatif, un mode de réalisation; sur ces dessins qui font partie intégrante de la présente description:

· la figure 1 est une vue partielle simplifiée en coupe axiale d'une machine conforme à l'invention,
· les figures 2 et 3 sont des coupes de détail à échelle dilatée des zones A et B de ladite machine.

La machine représentée à titre d'exemple aux figures comprend un certain nombre de moyens qui se retrouvent dans les machines traditionnelles de fabrication de tubes annelés et qui seront évoqués brièvement ci-dessous sans en fournir une description détaillée.

En amont, la machine comprend une tête d'extrusion 1 en l'exemple du type d'équerre ou offset, qui reçoit la matière thermoplastique à l'état malléable de la part d'une boudineuse et la transforme en tube lisse, la matière thermoplastique ayant un trajet qui forme un coude ou deux coudes successifs suivant le type de la tête (équerre ou offset).

Cette tête 1 est essentiellement constituée de façon classique par un corps 2, se prolongeant extérieurement par une filière 3 et contenant une torpille 4 qui en l'exemple ferme frontalement le corps et est positionnée au moyen d'un écrou de réglage 5 et d'un écrou de blocage 6; la torpille 4 porte un poinçon 7 qui est vissé dans celle-ci. Une barre cylindrique 8 est vissée en bout de ce poinçon et s'étend jusqu'à l'extrémité aval de la machine (sa longueur étant habituellement de l'ordre de 1 à 2 m). Cette barre porte sur sa périphérie une olive 9 qui peut glisser sur celle-ci; une entretoise 10 maintient l'olive dans la partie amont de la barre.

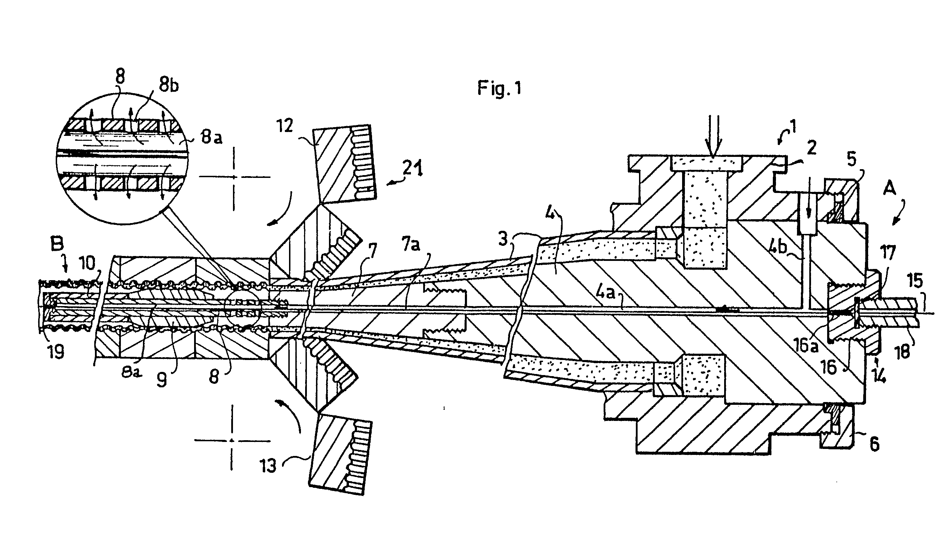

De plus, la machine comprend un moule 21 formé de deux chenillettes sans fin 12 et 13 entraînées dans le sens de la fléche dessinée à la figure 1. Chaque chenillette est constituée par une pluralité de matrices formeuses articulées les unes sur les autres à la manière, des maillons d'une chaîne. Le moule 21 s'étend sensiblement depuis l'extrémité de la filière 3 jusqu'à une zone située légèrement en amont de l'extrémité de la barre 8 (pour pouvoir mettre en place ou ôter celle-ci au début ou à la fin des opérations). Le moule est adapté pour conformer la paroi annelée du tube.

Conformément à la présente invention, la torpille 4, le poinçon 7 et la barre 8 sont percés sur toute leur longueur, d'un canal axial rectiligne 4a, 7a et 8a qui est adapté pour faire à la fois fonction de canal de circulation d'air comprimé et de canal guide-fil. Pour un fil de diamètre égal à 9/10 mm, ce canal peut présenter un diamètre de l'ordre de 4 mm environ.

Le canal 4a communique avec un canal latéral 4b percé à travers la torpille 4 et le corps 2 et raccordé à une arrivée d'air comprimé à une pression de l'ordre de 0,5 à 1,2 kg/cm² selon les caractéristiques du tube annelé à réaliser.

En outre, la barre 8 est percée en amont de l'olive 9 de plusieurs trous transversaux tels que 8b, qui autorisent une sortie centrifuge de l'air avec faibles pertes de charge.

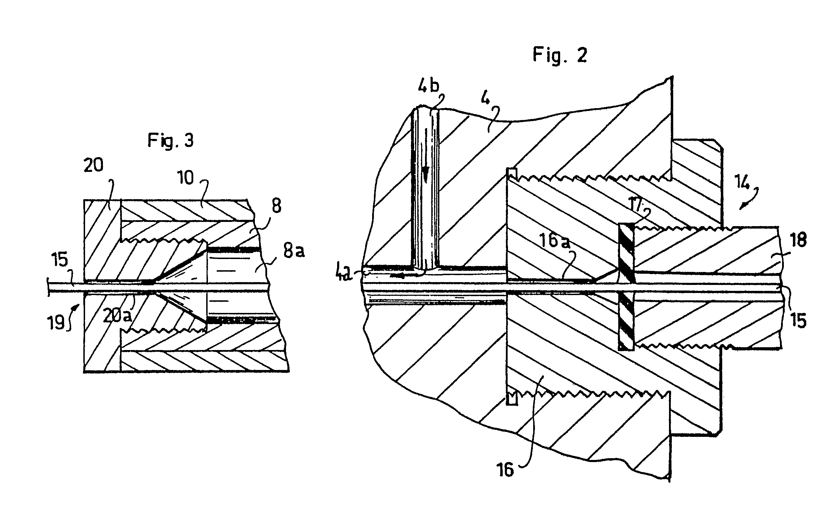

Par ailleurs, à l'extrémité amont, le canal 4a de la torpille est raccordé par l'entremise de moyens d'obturation partielle 14 à des moyens d'amenée d'un fil 15. On a représenté en détail ces moyens à la figure 2. Le canal axial 4a de la torpille débouche frontalement dans un logement taraudé ménagé dans celle-ci. Une vis 16 est vissée dans ce logement; cette vis est percée selon son axe d'un canal calibré 16a qui vient s'aligner coaxialement avec le canal axial rectiligne 4a. Pour un fil de diamètre égal à 9/10 mm, ce canal calibre peut présenter un diamètre interne de l'ordre de 10/10 mm.

La vis 16 comporte en outre un logement en amont du canal calibré 16a, dans lequel est disposée une membrane souple 17 par exemple en élastomère. Cette membrane est maintenue par un tube 18 d'alimentation en fil, que est percée axialement d'un canal d'amenée du fil. En amont, des moyens d'entraînement du fil délivrent celui-ci en synchronisme avec la vitesse de défilement du tube annelé.

Dans le cas d'un fil rigide ou semi-rigide, tel que fil métallique, la membrane 17 est percée au début des opérations au moyen du fil, de façon à épouser le contour de celui-ci. Dans le cas d'un fil synthétique, elle est percée à un diamètre identique à celui du fil.

Par ailleurs, à l'extrémité aval de la machine, le canal 8a de la barre 8 est doté de moyens d'obturation partielle 19, représentés à échelle dilatée à la figure 3.

Ces moyens comprennent en l'exemple une vis 20 formant bouchon percée d'un canal axial calibré 20a; pour un fil de diamètre de 9/10 mm, ce canal peut présenter un diamètre de l'ordre de

$$\frac{10}{10} \text{ à } \frac{20}{10} \text{ mm.}$$

La machine perfectionnée ci-dessus décrite présente un fonctionnement parfaitement satisfaisant, analogue à celui des machines traditionnelles sans fil intérieur. La consommation d'air comprimé est sensiblement du même ordre et le tube annelé sort avec une conformation irréprochable; le fil ne subit aucune contrainte particulière et son alimentation et son défilement s'effectuent sans aucun problème technique.

Bien entendu, l'invention n'est pas limitée aux termes de la description qui précède, mais en comprend toutes les variantes.

**Revendications**

1. Machine pour la fabrication en continu d'un tube annelé en matière thermoplastique contenant un fil intérieur libre de petit diamètre par rapport à celui du tube annelé, cette machine comprenant:

- une tête d'extrusion (1) formée d'un corps amont (2) pour l'arrivée de la matière thermoplastique, d'une filière (3) et d'une torpille intérieure (4) se prolongeant par un poinçon (7) pour la conformation tubulaire de la matière,

· une barre (8) porteuse d'olive, adaptée pour se fixer dans le prolongement du poinçon (7) et porter sur sa périphérie une olive (9),

· un moule fermé (21), adapté pour conformer la paroi annelée du tube et constitué de deux séries de matrices formeuses tournantes, formant deux chenillettes sans fin (12, 13),

· des moyens d'amenée d'un fluide sous pression comportant un canal d'arrivée de fluide (4a) au niveau du corps et de la torpille, se prolongeant par un canal axial (7a, 8a) au niveau de poinçon et de la barre porteuse d'olive,

· des moyens d'alimentation en fil et des moyens d'amenée dudit fil au niveau de la tête d'extrusion (1), ladite machine étant caractérisée en ce que:

· les moyens d'amenée de fil dans la tête d'extrusion débouchent dans le canal d'arrivée de fluide (4a), ledit canal (4a) ainsi que le canal axial (7a, 8a), du poinçon (7) et de la barre (8) étant adaptés pour remplir la double fonction de conduit de fluide et de guide de fil,

· lesdits moyens d'amenée de fil comprennent en amont de la zone de jonction avec le canal d'arrivée de fluide, des moyens d'obturation partielle (14) aptes à autoriser le passage du fil et à introduire une perte de charge adaptée pour limiter la dépression dans le canal d'arrivée de fluide (4a),

· la barre (8) porteuse d'olive est percée, en amont de l'olive (9), de canaux de sortie de fluide (8b) et est dotée en aval desdits canaux de moyens d'obturation partielle (19) de son canal axial aptes à autoriser le passage du fil et à introduire une perte de charge adaptée pour limiter la dépression au niveau des canaux de sortie (8b) précités.

2. Machine selon la revendication 1, caractérisée en ce que les moyens d'obturation partielle (14) associés aux moyens d'amenée de fil comprennent un canal calibré de passage du fil (16a), situé entre les moyens d'alimentation en fil et le canal arrivée de fluide (4a), ledit canal calibre (16a) présentant un diamètre légèrement supérieur au diamètre du fil de façon à préserver autour dudit fil un jeu approximativement compris entre

$$\frac{2}{100} \text{ mm et } \frac{20}{100} \text{ mm.}$$

3. Machine selon l'une des revendications 1 ou 2, caractérisée en ce que les moyens d'obturation partielle (14) associés aux moyens d'amenée de fil comprennent une membrane d'étanchéité (17) en matière souple, traversée par le fil et située entre les moyens d'alimentation en fil et le canal d'arrivée de fluide.

4. Machine selon les revendications 2 et 3 prises ensemble, caractérisée en ce que les moyens d'obturation partielle (14) associés aux moyens d'amenée de fil comprennent à la fois le canal calibré de passage du fil (16a) et la membrane en matière souple (71), cette dernière étant située en amont dudit canal calibré.

5. Machine selon l'une des revendications 1, 2, 3 ou 4, caractérisée en ce que les moyens d'obturation partielle (19) associés à la barre porteuse d'olive (8) comprennent un bouchon (20) obturant partiellement le canal axial (8a) de ladite barre, ledit bouchon étant percé d'un canal axial (20a) adaptée pour autoriser le passage du fil avec du jeu.

6. Machine selon l'une des revendications 1, 2, 3, 4 ou 5, dans laquelle la barre porteuse d'olive (8) présente une longueur au moins égale à 1 m, caractérisée en ce que les moyens d'obturation partielle (19) associés à la barre porteuse (8) sont constitués au moins en partie, par le canal axial (8a) de ladite barre, ce canal (8a) ayant un diamètre au plus égal à environ 5 fois le diamètre du fil.

7. Machine selon l'une des revendications précédentes, dans laquelle la tête d'extrusion (1) est une tête du type tête d'équerre ou tête offset, caractérisée en ce que la torpille (4) est percée d'un canal rectiligne axial (4a) situé dans le prolongement du canal axial (7a) du poinçon et adapté pour faire office de conduit de fluide et de guide de fil, ce canal (4a) débouchant frontalement en amont de ladite torpille (4), où il est raccordé aux moyens d'amenée de fil et communiquant, en aval, avec un canal latéral d'amenée de fluide (4b) dont est percée la torpille et le cas échéant le corps de la tête d'extrusion.

8. Machine selon les revendications 2 et 7 prises ensemble, caractérisée en ce que le canal calibré de passage du fil (16a) est percé selon l'axe d'une vis (16), laquelle est vissée dans un logement taraudé ménagé frontalement dans la torpille (4) de sorte que ledit canal calibré (16a) et le canal rectiligne axial (4a) soient coaxiaux.

9. Machine selon les revendications 4 et 8 prises ensemble, caractérisée en ce que la membrane souple (17) est portée par la vis (16) dans un logement pratiqué dans celle-ci en amont du canal calibré (16a), les moyens d'alimentation en fil débouchant dans ledit logement.

10. Machine selon l'une des revendications 1, 2, 3, 4, 5 ou 6, dans laquelle la tête d'extrusion (1) est une tête du type tête droite, ayant un canal d'arrivée de fluide coudé avec un tronçon amont oblique et un tronçon aval axial, ladite machine étant caractérisée en ce que les moyens d'amenée de fil sont raccordés sur le tronçon amont oblique du canal d'arrivée de fluide.

11. Machine selon l'une des revendications précédentes dans laquelle les moyens d'alimentation en fil comprennent des moyens d'entraînement synchronisés pour délivrer le fil à une vitesse égale à la vitesse de défilement du tube annelé.

12. Machine selon l'une des revendications 7, 8 ou 9, permettant en particulier d'insérer un fil en matière synthétique dans le tube annelé, caractérisée en ce qu'elle est associée, en aval, à des moyens de traction du fil à une vitesse égale à la vitesse de défilement du tube annelé.

**Patentansprüche**

1. Vorrichtung zum kontinuierlichen Herstellen von Wellrohren aus thermoplastischem Werkstoff mit einem freiliegenden inneren Draht kleinen Durchmessers im Vergleich zu dem des Wellrohrs, wobei diese Vorrichtung

—einen aus einem Oberteil (2) für den Einlass des thermoplastischen Werkstoffs, einem Zieheisen (3) und einer sich in einer Strangpressform (7) zur rohrförmigen Gestaltung des Werkstoffs fortsetzenden inneren Schale (4) gebildeten Spritzkopf (1);
—eine Tragschiene (8) für einen Knauf, welche befähigt ist, in der Fortsetzung der Strangpressform (7) befestigt zu werden und auf ihrem Umfang einen Knauf (9) zu tragen;
—eine geschlossene Gussform (21), welche befähigt ist, die gewellte Wandung des Rohrs zu formen, und aus zwei Reihen rotierender formgebender Matrizen, welche zwei endlose Raupen (12, 13) bilden, besteht;
—Mittel zur Zuführung eines unter Druck stehendes Fluids, enthaltend eine Einlasskanal für das Fluid (4a) auf der Höhe des Körpers und der Schale, welcher sich in einem axialen Kanal (7a, 8a) auf der Höhe der Strangpressform und der Knauftragschiene fortsetzt; und
—Mittel zur Zuführung von Draht und Mittel zum Einlass des besagten Drahts auf der Höhe des Spritzkopfs (1) umfasst, wobei die besagte Vorrichtung dadurch gekennzeichnet ist, dass
—die Mittel zur Züführung von Draht an den Spritzkopf im Fluideinlasskanal (4a) münden, wobei der besagte Kanal (4a) sowie der axiale Kanal (7a, 8a) der Strangpressform (7) und der Schiene (8) befähigt sind, die doppelte Funktion der Fluid-Röhre und der Drahtführung zu erfüllen;
—die besagten Drahtzuführungsmittel oberhalb des Verbindungsbereichs mit dem Fluideinlasskanal Mittel zum teilweisen Verschluss (14) umfassen, welche befähigt sind, den Durchgang des Drahts zu ermöglichen une einen zur Begrenzung der Druckverminderung im Fluideinlasskanal (4a) geeigneten Druckabfall zu erzeugen; und
—die Knauftragschiene (8) oberhalb des Knaufs (9) von Fluidauslasskanälen (8b) durchbrochen und unterhalb dieser Kanäle mit Mitteln zum teilweisen Verschluss (19) seines axialen Kanals versehen ist, welche befähigt sind, den Durchgang des Drahts zu ermöglichen und einen zur Begrenzung der Druckverminderung auf der Höhe der vorgenannten Auslasskanäle (8b) geeigneten Druckabfall zu erzeugen.

2. Vorrichtung nach Anspruch 1, dadurch gekennzeichnet, dass die den Drahteinlassmitteln zugeordneten teilweisen Verschlussmittel (14) einen abgemessenen, zwischen der Drahtzuführungsmitteln und dem Fluideinlasskanal (4a) liegenden Durchgangskanal (16a) für den Draht umfassen, wobei der besagte abgemessene Kanal (16a) eine etwas höheren Durchmesser als den des Drahts aufweist, um einen Spielraum von zwischen etwa

$$\frac{2}{100} \text{ mm und } \frac{20}{100} \text{ mm}$$

un den besagten Draht zu halten.

3. Vorrichtung nach einem der Ansprüche 1 oder 2, dadurch gekennzeichnet, dass die den Drahteinlassmitteln zugeordneten teilweisen Verschlussmittel (14) eine Dichtungsmembrane (17) aus biegsamm Werkstoff umfassen, welche durch den Draht durchbrochen ist und zwischen den Drahtzuführungsmitteln und dem Fluideinlasskanal liegt.

4. Vorrichtung nach den Ansprüchen 2 und 3 zusammen, dadurch gekennzeichnet, dass die den Drahteinlassmitteln zugeordneten teilweisen Verschlussmittel (14) sowohl den abgemessenen Durchgangskanal (16a) für den Draht und die Membrane (17) aus biegsamem Werkstoff umfassen, wobei letztere oberhalb des besagten abgemessenen Kanals liegt.

5. Vorrichtung nach einem der Ansprüche 1, 2, 3 oder 4, dadurch gekennzeichnet, dass die der Knauftragsschiene (8) zugeordneten teilweisen Verschlussmittel (19) einen den axialen Kanal (8a) der besagten Schiene teilweise verschliessenden Stöpsel (20) umfassen, wobei der besagte Stöpsel durch einen axialen Kanal (20a) durchbrochen wird, welcher befähigt ist, den Durchgang des Drahts mit Spielraum zu ermöglichen.

6. Vorrichtung nach einem der Ansprüche 1, 2, 3, 4 oder 5, bei welcher die Knauftragschiene (8) eine Länge von mindestens 1 m aufweist, dadurch gekennzeichnet, dass die der Tragschiene (8) zugeordneten teilweisen Verschlussmittel (19) mindestens teilweise aus dem axialen Kanal (8a) der besagten Schiene bestehen, wobei dieser Kanal (8a) einen höchstens etwa dem 5-fachen Drahtdurchmesser gleichen Durchmesser aufweist.

7. Vorrichtung nach einem der vorangehenden Ansprüche, bei welcher der Spritzkopf (1) ein T-Stück- oder gekröpfter Typ Kopf ist, dadurch gekennzeichnet, dass die Schale (4) von einem axialen, geradlinigen Kanal (4a) durchbrochen ist, welcher in der Fortsetzung des axialen Strangpresskanals (7a) liegt und befähigt ist, als Fluid-Röhre und Drahtführung zu dienen, wobei dieser Kanal (4a) stirnseitig oberhalb der besagten Schale (4) mündet, wo er an die Drahtzuführungsmittel angeschlossen ist und darunter mit einem seitlichen Fluidzuführungskanal (4b) in Verbindung steht, durch welchen die Schale und gegebenenfalls der Spritzkopfkörper durchbrochen ist.

8. Vorrichtung nach den Ansprüchen 2 und 7 zusammen, dadurch gekennzeichnet, dass der abgemessene Durchgangskanal (16a) für den Draht entlang der Achse einer Schraube (16) durchbrochen ist, welche in ein stirnseitig in die Schale (4) eingearbeitetes Gehäuse mit Innengewinde eingeschruabt ist, sodass der besagte abgemessene Kanal (16a) und der axiale geradliniage Kanal (4a) coaxial liegen.

9. Vorrichtung nach den Ansprüchen 4 und 8 zusammen, dadurch gekennzeichnet, dass die biegsame Membrane (17) durch die Schraube (16) in ein in diese eingearbeitetes Gehäuse oberhalb des abgemessenen Kanals (16a) gebracht wird, wobei die Drahtzuführungsmittel in diesen Gehäuse münden.

10. Vorrichtung nach einem der Ansprüche 1, 2, 3, 4, 5 oder 6, bei welcher der Spritzkopf (1) ein solcher ist, welcher einen geraden Kopf und einen gekrümmten Fluideinlasskanal mit einem schrägen Oberteil und einem axialen Unterteil aufweist, wobei die besagte Vorrichtung dadurch gekennzeichnet, ist, dass die Drahtzuführungsmittel am schrägen Oberteil des Fluideinlasskanals angeschlossen sind.

11. Vorrichtung nach einem der vorangehenden Ansprüche, bei welcher die Drahtzuführungsmittel synchron abgestimmte Antriebsmittel umfassen, um den Draht mit einer der Durchlaufgeschwindigkeit des Wellrohrs gleichen Geschwindigkeit abzugeben.

12. Vorrichtung nach einem der Ansprüche 7, 8 oder 9, welche insbesondere des Einsetzen eines Kunststoffdrahts in das Wellrohr ermöglicht, dadurch gekennzeichnet, dass sie unten Zugmitteln für den Draht mit einer der Durchlaufgeschwindigkeit des Wellrohrs gleichen Geschwindigkeit zugeordnet ist.

**Claims**

1. Apparatus for the continuous manufacture of a corrugated tube of thermoplastic material, containing a free internal wire of small diameter, relative to that of the corrugated tube, this apparatus comprising

— an extruder head (1), formed by an upstream body (2) for the inlet of the thermoplastic material, a drawplate (3) and an internal shell (4) which continues in an extruder die (7) for the tubular shaping of the material;
— a carrier rail (8) for a knob, capable of being fastened in the extension of the extruder die (7) and of carrying a knob (9) on its circumference;
— a closed mould (21), capable of shaping the corrugated wall of the tube and consisting of two series of rotating shaping matrices, forming two endless caterpillars (12, 13);
— means for feeding a fluid under pressure, containing a fluid inlet duct (4a) at the level of the body and of the shell, which continues in an axial duct (7a, 8a) at the level of the extruder die and of the knob-carrying rail; and
— means for feeding wire and means for the admission of said wire at the level of the extruder head (1), said apparatus being characterised in that
— the means for feeding wire to the extruder head issue in the fluid inlet duct (4a), said duct (4a) and the axial duct (7a, 8a) of the extruder die (7) and of the rail (8) being capable of fulfilling the dual function of fluid pipe and wire guide;
— said wire feeding means comprise, upstream of the joining zone with the fluid inlet duct, means for partial closure (14), capable of rendering the passage of wire possible and of generating a pressure drop suitable for limiting the pressure reduction in the fluid inlet duct (4a); and
— the knob-carrying rail (8) is penetrated, upstream of the knob (9), by fluid exit ducts (8b) and, downstream of said ducts, is provided with means (19) for the partial closure of its axial duct, which are capable of rendering the passage of wire possible and of generating a pressure drop suitable for limiting the pressure reduction at the level of the abovementioned exit ducts (8b).

2. Apparatus according to Claim 1, characterised in that the partial closure means (14), associated with the wire admission means, comprise a gauged duct (16a) for the passage of the wire, situated between the wire feeding means and the fluid inlet duct (4a), said gauged duct (16a) having a slightly larger diameter than the diameter of the wire, so as to keep a clearance of between

$$\frac{2}{100} \text{ mm and } \frac{20}{100} \text{ mm,}$$

approximately, about the wire.

3. Apparatus according to either of the Claims 1 or 2, characterised in that the partial closure means (14), associated with the wire admission means, comprise a sealing membrane (17) of flexible material, penetrated by the wire and situated between the wire feeding means and the fluid inlet duct.

4. Apparatus according to Claims 2 and 3, taken together, characterised in that the partial closure means (14), associated with the wire admission means, comprise both the gauged duct (16a) for the passage of the wire and the membrane (17) of flexible material, the latter being situated upstream of said gauged duct.

5. Apparatus according to one of the Claims 1, 2, 3 or 4, characterised in that the partial closure means (19), associated with the knob-carrying rail (8), comprise a stopper (20), partially closing the axial duct (8a) of said rail, said stopper being penetrated by an axial duct (20a), capable of rendering the passage of the wire with clearance possible.

6. Apparatus according to one of the Claims 1, 2, 3, 4 or 5, in which the knob-carrying rail (8) has a length at least equal to 1 metre, characterised in that the partial closure means (19), associated with the carrier rail (8), consist, at least in part, of the axial duct (8a) of said rail, this duct (8a) having a diameter at most 5 times the wire diameter, approximately.

7. Apparatus according to one of the preceding Claims, in which the extruder head (1) is a T-square type head or offset type head, characterised in that the shell (4) is penetrated by an axial rectilinear duct (4a), situated in the extension of the axial duct (7a) of the extruder die and capable of serving as fluid pipe and wire guide, this duct (4a) issuing, on the front side, upstream of said shell (4), where it is attached to the wire admission means, and communicating downstream with a lateral fluid inlet duct (4b), by which the shell and, optionally, the body of the extruder head are penetrated.

8. Apparatus according to Claims 2 and 7, taken together, characterised in that the gauged duct (16a) for the passage of the wire is penetrated along the axis of a screw (16), which is screwed into a tapped casing, made into the shell (4) on the front side, so that said gauged duct (16a) and the axial rectilinear duct (4a) are coaxial.

9. Apparatus according to Claims 4 and 8, taken together, characterised in that the flexible membrane (17) is taken by the screw (16) into a casing made into the latter upstream of the gauged duct (16a), the wire feeding means issuing in said casing.

10. Apparatus according to one of the Claims 1, 2, 3, 4, 5 or 6, in which the extruder head (1) is a head of the straight head type, having a bent fluid inlet duct with an oblique upstream portion and an axial downstream portion, said apparatus being characterised in that the wire admission means are attached to the oblique upstream portion of the fluid inlet duct.

11. Apparatus according to one of the preceding Claims, in which the wire feeding means comprise synchronized drive means for delivering the wire at a speed equal to the speed of passage of the corrugated tube.

12. Apparatus according to one of the Claims 7, 8 or 9, particularly enabling a wire of synthetic material to be inserted into the corrugated tube, characterised in that it is associated downstream with means for the traction of the wire at a speed equal to the speed of passage of the corrugated tube.

Fig.1

Fig. 2

Fig. 3

0 055 494